# EUROPEAN PATENT APPLICATION

(11) **EP 3 725 727 A1**
(43) Date of publication of application: **21.10.2020**
(21) Application number: 19170268.7
(22) Date of filing: 18.04.2019
(51) Int. Cl.: B66C 1/58, B66C 1/68, B66C 13/20, B66C 23/00

(54) **CONTROL SYSTEM FOR A CRANE OF A WORKING MACHINE, METHOD AND WORKING MACHINE**

(71) Applicant: Deere & Company, Moline, IL 61265 (US)
(72) Inventor: Palmroth, Mikko, 68163 Mannheim (DE); Paakkunainen, Marko, 68163 Mannheim (DE)
(74) Representative: Lavall, Christian Henner

(57) **Abstract**

A control system (10) configured to control a crane (12) with at least two boom sections (14, 16), comprising a crane (12) with a boom assembly, comprising at least two boom sections (14, 16), movably connected to each other, and a boom extension (18), movably connected to a boom section (14, 16), and a boom tip section (20), able to hold and operate a crane tool (22), wherein the boom assembly is actuated by hydraulic actuators (24), a control device, being able to detect a speed and/or a position and/or hydraulic pressure of the boom assembly, and to control the movement of the boom assembly, the control system (10) being able to measure a current boom assembly actuating speed and/or a current boom assembly position and/or hydraulic pressure, comparing the measured current speed and/or position and/or hydraulic pressure with an intended speed/position.

## Description

The invention relates to a control system for controlling a crane. The invention further relates to a method for controlling a crane. The invention further relates to a working machine having a crane.

Working machines comprise an articulated crane which further has a tool attached to a boom tip of the crane. The tool may be a gripping tool, an excavating tool, or in case of forestry related working machines a harvesting or processing head, or a log grapple. Such tools handle heavy load, that may comprise a load of soil or logs or raw material. Usually such cranes are controlled by hydraulic actuators that are driven by hydraulic pressure from one or more pumps. The pumps are usually powered by the primary power source of the vehicle.

When the crane is used to lift load, the primary power load is providing the lifting capacity via the hydraulic circuit, the pumps and the hydraulic actuators, also called lifting moment. Every load on the crane has a lever arm which results in a lifting torque which is applied to the crane. In case a load is handled that requires more lifting capacity than available, or is exceeding the lift capacity, the crane will provide only limited, slow or no movement capabilities. When a resulting lifting torque exceeds the lifting moment of a crane, a loading operation cannot proceed. The crane operation requires therefore preplanning of the load and the movements involved.

The present invention overcomes the aforesaid problem by providing a control system for a crane according to the independent claims.

The invention discloses a control system configured to control a crane with at least two boom sections, comprising a crane with a boom assembly, comprising at least two boom sections, movably connected to each other, and a boom extension, movably connected to one boom section, and a boom tip section, able to hold and operate a crane tool, wherein the boom assembly is actuated by hydraulic actuators, a control device, being able to detect a speed and/or a position and/or hydraulic pressure of the boom assembly, and to control the movement of the boom assembly, the control system being able to measure a current boom assembly actuating speed and/or a current boom assembly position and/or hydraulic pressure, comparing the measured current speed and/or position and/or hydraulic pressure with an intended speed, position, or hydraulic pressure and calculating a movement of the boom assembly to influence the lifting torque on the boom assembly so that the intended boom section/boom tip section speed and/or position and/or hydraulic pressure is secured.

The control system adjusts the crane components so that the lifting torque, resulting from a load on the crane, is reduced and an overload situation, where the hydraulic system has only insufficient power or where the lifting moment is insufficient is avoided. The control system secures sufficient lifting moment of the crane and allows keeping the crane within workable parameters by reducing the lever arm of the crane load.

The boom tip section may comprise a position measuring device.

The positioning device can be used to directly receive position data and at the same time measure acceleration. This allows to calculate the response time of the crane components in regard of the related operator commands. A slow response is an indicator of heavy load on the crane and the hydraulic power system. The control system can evaluate the condition and initiate the movement of the crane.

The boom assembly may comprise a position measuring.

The positioning device can be used to directly receive position data and at the same time measure acceleration. This allows to calculate the response time of the crane components in regard of the related operator commands. A slow response is an indicator of heavy load on the crane and the hydraulic power system. The control system can evaluate the condition and initiate the movement of the crane.

The boom assembly may comprise a pressure measuring device to measure the hydraulic pressure.

The hydraulic pressure is an indicator of the current load applied on the hydraulic actuator. The pressure enables the control system to calculate the load and further calculate the related load on the remainder of the crane components. The pressure value also enables to calculate the necessary hydraulic power required to uphold the operation of the hydraulic actuators.

The invention further concerns a method for controlling a crane comprising a boom assembly with at least two boom sections, movably connected to each other, and a boom extension, movably connected to a boom section, and a boom tip section, able to hold and operate a crane tool, wherein the boom assembly is actuated by hydraulic actuators, a control device, being able to detect a speed and/or a position and/or hydraulic pressure of the boom assembly, the method measuring a current boom assembly actuating speed and/or a current boom assembly position and/or hydraulic pressure, comparing the measured current speed and/or position and/or hydraulic pressure with an intended speed/position/hydraulic pressure, and calculating a movement of the boom assembly to influence the lifting moment on the boom assembly so that the intended boom section/boom tip section speed and/or position and/or hydraulic pressure is secured.

The method adjusts the crane components so that the lifting torque, resulting from a load on the crane, is reduced and an overload situation, where the hydraulic system has only insufficient power or where the lifting moment is insufficient is avoided. The control system secures sufficient lifting moment of the crane and allows keeping the crane within workable parameters. By mechanically altering the positions of the crane components the lever arm of the crane can be reduced.

The method may reduce the lifting torque and the lever arm on the boom assembly so that the boom assembly is actuated to move the boom tip section closer to the crane.

The method can be used to bring the boom tip section closer to a base of the crane. It may actuate multiple crane components to enable the movement. The method secures a stable and safe operation of the crane without a loss in hydraulic power or an overload on the primary power source driving the hydraulic pumps.

The boom extension may be moved inwards to reduce the lifting torque and the lever arm.

At least one boom section may be actuated to reduce the lifting torque.

The method allows a coordinated manipulation of the crane components depending on the detected load or lever arm and the position and arrangement of the crane. It is possible to safely move the crane so that the boom tip section is maintaining its height above the ground ensuring clearance. Also, the method can allow a coordinated movement avoiding a safety corridor between the boom tip section and the vehicle boundaries.

The invention further concerns a forestry vehicle comprising a control system configured to control a crane with at least two boom sections, comprising a crane with a boom assembly, comprising at least two boom sections, movably connected to each other, and a boom extension, movably connected to one boom section, and a boom tip section, able to hold and operate a crane tool, wherein the boom assembly is actuated by hydraulic actuators, a control device, being able to detect a speed and/or a position and/or hydraulic pressure of the boom assembly, and to control the movement of the boom assembly, the control system being able to measure a current boom assembly actuating speed and/or a current boom assembly position and/or hydraulic pressure, comparing the measured current speed and/or position and/or hydraulic pressure with an intended speed/position/hydraulic pressure, and calculating a movement of the boom assembly to influence the lifting moment on the boom assembly so that the intended boom section/boom tip section speed and/or position and/or hydraulic pressure is secured.

The forestry vehicle can adjust the crane components so that the lifting torque and lever arm are reduced and an overload situation, where the hydraulic system has only insufficient power or where the lifting moment is insufficient is avoided. The control system secures sufficient lifting moment of the crane and allows keeping the crane within workable parameters. By mechanically altering the positions of the crane components the lever arm of the crane can be reduced.

The boom tip section may comprise a position measuring device.

The positioning device can be used to directly receive position data and at the same time measure acceleration. This allows to calculate the response time of the crane components in regard of the related operator commands. A slow response is an indicator of heavy load on the crane and the hydraulic power system. The control system can evaluate the condition and initiate the movement of the crane.

The boom assembly may comprise a position measuring device.

The positioning device can be used to directly receive position data and at the same time measure acceleration. This allows to calculate the response time of the crane components in regard of the related operator commands. A slow response is an indicator of heavy load on the crane and the hydraulic power system. The control system can evaluate the condition and initiate the movement of the crane.

The boom assembly may comprise a pressure measuring device to measure the hydraulic pressure inside the actuator.

The hydraulic pressure is an indicator of the current load applied on the hydraulic actuator. The pressure enables the control system to calculate the load and further calculate the related load on the remainder of the crane components. The pressure value also enables to calculate the necessary hydraulic power required to uphold the operation of the hydraulic actuators.

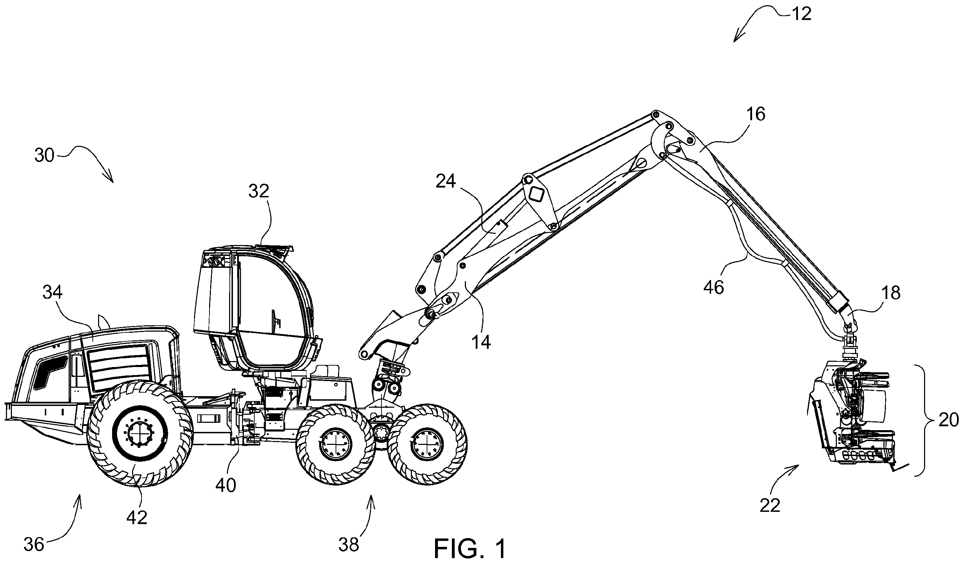

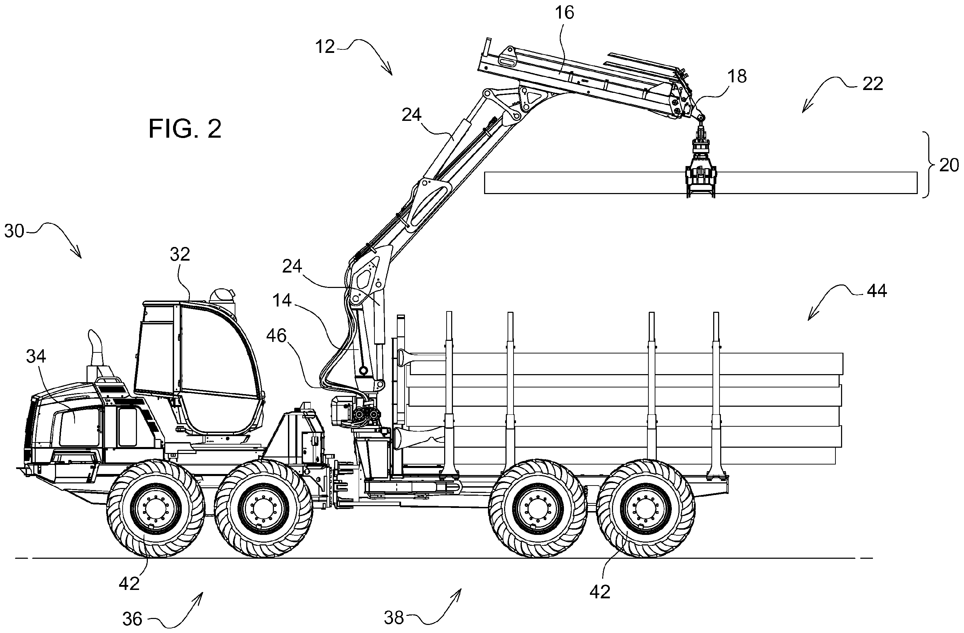

The invention is further described according to Figures 1 and 2.
Figure 1 shows a forestry vehicle, especially a so-called harvester.
Figure 2 shows a forestry vehicle, especially a so-called forwarder.

Figure 1 depicts a harvester vehicle 30. The harvester 30 consists of two chassis parts 36, 38 which are linked by a joint 40 to enable steering of the vehicle. Usually the rear chassis 38 comprises the engine 34, being the main power source 34, also for hydraulic power. The drivers cabin and operator station 32 as well as the crane 12 for handling the logs are provided on the front chassis 36. The cabin 32 enables the operator to overview the work area and to work felling and cutting trees and to adjust the vehicle 30 to any special requirements.

The crane 12 is mounted on a slewing apparatus on the front chassis 36, that enables rotation and slewing of the crane assembly. The crane 12 has a first and second boom section 14, 16 which are rotatable connected to each other. The second boom section 16 additional comprises a boom extension 18 which allows to further drive out the boom tip section 20 by a linear sliding motion of the boom extension 18 in relation to the second boom section 16 thus extending the reach of the crane 12. A crane tool 22 is usually movably fixed to the boom tip section 20 in the form of a harvester head. It may also be a tool for processing logs, or loading/moving logs.

In the case of cutting a tree or log, the crane 12 is used to attach the crane tool 22 to a tree stem and use the included saw blade to cut the tree. After falling over, the tree is then pulled through the tool 22 and is cut at specified predetermined lengths depending among others on the wood quality.

Especially directly after a tree is cut and has fallen over, the weight of the tree is held by the crane tool 22. At that time, the hydraulic power is used to move the feeding wheels and to power the saw blade to start moving the tree and cutting it, while supporting the weight by the crane 12. This can lead to a power decrease in hydraulic power due to the raised demand and may lead to a slow reaction time of all hydraulic consumers involved, including the crane hydraulics, the feeding wheel motors and the saw blade motor and actuators. This will further lead to an increase of work time and a decrease of productivity which may also increase cost.

The control system 10 may include a CPU able to compute data and signals related to the current position of the crane 12 and all its components as mentioned. The control system 10 computes hydraulic pressure data from the hydraulic actuators 24 and/or speed data from position sensors on the crane components. Such position sensors can be included on the boom tip section 20, the boom extension 18 and the boom sections 14, 16.

The position data and/or the pressure data from the sensors is interpreted by the control system 10. The data can give information about the speed of the different crane components as well as the acceleration.

Pressure data may allow information about the available hydraulic power.

The control system 10 can compare the measured and computed data with a preselected threshold or with a predetermined speed/position as indicated by operator commands such as control lever or joystick movement and degree. The operator may set a movement speed or hydraulic power threshold that allows a fluid and accurate work speed.

When the control system 10 detects a deviation from the predetermined parameters the control system 10 computes the elongation of the crane 12, that means the distance from a determined base point on the working vehicle 30 to the boom tip section 20 and evaluates a lever arm for the result. The control system 10 is able to calculate the lever arm forces and the lifting moment in regard to the lever arm acting on the crane components. As a result, the control system 10 can stop movement of all crane components except those which are able to bring the boom tip section 20 closer to the base so that the distance is reduced and thus is the lifting moment. This allows the operator to avoid controlling all crane components individually and to continue holding the controls in a usual manner, as if in ordinary operation. The control system 10 filters the operator commands and moves the boom tip section 20 closer to the base, if the operator continues holding the controls. By bringing the load of the crane 12 closer to the base, the reduced load also reduces the requirement for hydraulic power on all components of the crane 12. At a closer distance, the control system 10 computes the new position measurements or the new pressure measurements and switches back to a normal operation mode, where all crane components can resume operation as intended by the operator.

The control system 10 thus avoids that the crane 12 is slowed down unnecessarily during lifting or holding operations that demand a high hydraulic power to sustain. The control system 10 brings the boom tip section 20 closer and thus reduces lifting forces.

Figure 2 depicts a forwarder, a working vehicle 30 which is used to load log and to transport these out of the forest area. The vehicle 30 comprises a front chassis 36 with an operator cabin or station 32 and a primary power source 34. The vehicle 30 is usually travelling on wheel 42, yet also tracked vehicles are available. The rear chassis 38 provides a loading space 44 where the loaded logs are placed. The crane 12 in general matches the crane 12 of figure 1, but is comprising a more vertical first boom section 14 to be placed next to the load space 44. The crane 12 can be tilted and rotated so that the reach is provided around the vehicle 30 and the load space 44. The boom tip section 20 usually comprises a grabbing tool as a crane tool 22 to grab and handle logs of a particular size and length.

Such vehicles usually drive on forest roads and reach out to handle and load logs along the road side. As these vehicles are reduced in their mobility, the crane 12 is therefore used to extend to the logs and grab these. During these operations, the extend of the boom tip section 20 together with a fully extended crane 12 results in a long lever arm and thus in high lifting torque.

The crane 12 is equipped with sensors in the boom sections 14, 16 and or the boom extension 18 and or the boom tip section 20. The sensors can detect the position and/or the pressure of the related hydraulic actuators 24. The control system 10 computes from the data the current position and/or speed and/or the current load on the hydraulic actuators 24. In case a deviation of the parameters values in comparison to the intended/predetermined parameter values the control system 10 stops or slows all hydraulic actuators 24 except those involved in a coordinated movement of the crane 12 which allows to bring the boom tip section 20 closer to the base of the crane 12. This movement, which may involve multiple hydraulic actuators 24 is able to bring the boom tip section 20 closer in an orderly manner. The operator may realize that all other movements around other axes stopped or slowed. Yet, the operator can use the controls without any changes, the control system 10 computes the necessary movement of the crane components and controls these without the operator's special attention. After the boom tip section 20 is close enough to the base of the crane 12, the control system 10 receives changed sensor data indicating different position, speed or pressure. The control system 10 switches the operation mode back to a normal operation mode and all functions and movements of the crane 12 are restored and under the control of the operator.

The control system 10 can avoid the outer circumference of the vehicle 30, thus being able not only to bring the boom tip section 20 closer to the base, but also in the same time move the crane 12 alongside the vehicle boundaries and simultaneously reduce the lever arm of the crane 12. This allows to reduce the lever arm in case the crane 12 is extended not in a right angle to the vehicle orientation.

## Claims

1. A control system (10) configured to control a crane (12) with at least two boom sections (14, 16), comprising:
a crane (12) with a boom assembly, comprising at least two boom sections (14, 16),
movably connected to each other, and a boom extension (18), movably connected to one boom section (14, 16), and a boom tip section (20), able to hold and operate a crane tool (22),
wherein the boom assembly is actuated by hydraulic actuators (24),
a control device, being able to detect a speed and/or a position and/or hydraulic pressure of the boom assembly and to control the movement of the boom assembly, the control system (10) being able to measure a current boom assembly actuating speed and/or a current boom assembly position and/or hydraulic pressure, comparing the measured current speed and/or position and/or hydraulic pressure with an intended speed/position/hydraulic pressure,
and calculating a movement of the boom assembly to influence the lifting moment on the boom assembly so that the intended boom section/boom tip section speed and/or position and/or hydraulic pressure is secured.

2. Control System (10) according to claim 1, wherein the boom tip section (20) comprises a position measuring device.

3. Control System (10) according to claims 1 or 2, wherein the boom assembly comprises a position measuring device.

4. Control system (10) according to any of the claims 1 to 3, wherein the boom assembly comprises a pressure measuring device to measure the hydraulic pressure.

5. Method for controlling a crane (12) comprising a boom assembly with at least two boom sections (14, 16), movably connected to each other, and a boom extension (18), movably connected to a boom section (14, 16), and a boom tip section (20), able to hold and operate a crane tool (22),
wherein the boom assembly is actuated by hydraulic actuators (24),
a control device, being able to detect a speed and/or a position and/or hydraulic pressure of the boom assembly,
the method measuring a current boom assembly actuating speed and/or a current boom assembly position and/or hydraulic pressure, comparing the measured current speed and/or position and/or hydraulic pressure with an intended speed/position/hydraulic pressure,
and calculating a movement of the boom assembly to influence a resulting lifting torque on the boom assembly so that the intended boom section/boom tip section speed and/or position and/or hydraulic pressure is secured.

6. Method according to claim 5, wherein the boom assembly is actuated to move a load at the boom tip section (20) closer to the crane (12).

7. Method according to claim 5 or 6 wherein the boom extension (18) is moved inwards to reduce the lever arm.

8. Method according to any of the claims 6 or 7, wherein one or both boom sections (14, 16) are actuated to reduce the lever arm without further lifting the boom tip section (20).

9. Forestry vehicle (30) comprising a control system (10) configured to control a crane (12) with at least two boom sections (14, 16), comprising:
a crane (12) with a boom assembly, comprising at least two boom sections (14, 16),
movably connected to each other, and a boom extension (18), movably connected to one boom section (14, 16), and a boom tip section (20), able to hold and operate a crane tool (22),
wherein the boom assembly is actuated by hydraulic actuators (24),
a control device, being able to detect a speed and/or a position and/or hydraulic pressure of the boom assembly, and to control the movement of the boom assembly, the control system (10) being able to measure a current boom assembly actuating speed and/or a current boom assembly position and/or hydraulic pressure, comparing the measured current speed and/or position and/or hydraulic pressure with an intended speed/position/hydraulic pressure,
and calculating a movement of the boom assembly to influence a resulting lifting torque on the boom assembly so that the intended boom section/boom tip section speed and/or position and/or hydraulic pressure is secured.

10. Forestry vehicle (30) according to claim 9, wherein the boom tip section (20) comprises a position measuring device.

11. Forestry vehicle (30) according to claims 9 or 10, wherein at least one hydraulic actuator (24) comprises a position measuring device.

12. Forestry vehicle (30) according to any of the claims 9 to 11, wherein at least one hydraulic actuator (24) comprises a pressure measuring device to measure the hydraulic pressure inside the actuator.
